# EUROPEAN PATENT APPLICATION

(11) **EP 4 603 725 A1**
(43) Date of publication of application: **20.08.2025**
(21) Application number: 24213608.3
(22) Date of filing: 18.11.2024
(51) Int. Cl.: F16H 57/00, F16B 21/18

(54) **TRANSMISSION AND STRADDLED VEHICLE INCLUDING THE SAME**

(30) Priority: 16.02.2024 JP 2024021980
(71) Applicant: Yamaha Hatsudoki Kabushiki Kaisha, Iwata-shi, Shizuoka 438-8501 (JP)
(72) Inventor: Fujikura, Kyohei, Iwata-shi, Shizuoka, 4388501 (JP)
(74) Representative: Grünecker Patent- und Rechtsanwälte PartG mbB

(57) **Abstract**

Provided is a transmission (30) including an output shaft (43), a second gear (45), and a circlip (46). The output shaft (43) has a groove (43a). The second gear (45) has a through hole (B) into which the output shaft (43) is inserted. The second gear (45) is supported by the output shaft (43). The circlip (46) is fitted into the groove (43a). The circlip (46) regulates movement of the second gear (45) relative to the output shaft (43) in a direction of an axis (C) of the output shaft (43). The circlip (46) has a cross section (46b). The cross section (46b) of the circlip (46) is circular.

## Description

The present invention relates to a transmission and a straddled vehicle including the same.

JP 5805392 B2 discloses an assembly. The assembly includes a shaft, a component, a groove, and a retaining ring. The groove is formed in the shaft. The retaining ring is fitted into the groove. The retaining ring is, for example, a circlip. The circlip has a rectangular cross section. The component is in contact with the circlip. The circlip regulates relative movement in an axial direction between the shaft and the component. The component applies a thrust load to the circlip. The thrust load is also called an axial load.

The cross section of the circlip is rectangular. Therefore, the circlip is likely to deform the groove. For example, when the thrust load acts on the circlip, the circlip is likely to deform the groove. If the groove is deformed, the circlip is likely to disengage from the groove.

It is the object of the present invention to provide a transmission that easily prevents disengagement of a circlip, and a straddled vehicle including the same. According to the present invention said object is solved by a transmission having the features of independent claim 1. Preferred embodiments are laid down in the dependent claims.

Accordingly it is provided a transmission including:
a shaft having a groove. Said groove is arranged in circumferential direction on an outer surface of the shaft.

The transmission further including a gear that has a through hole into which the shaft is inserted and is supported by the shaft; and
a circlip that is fitted into the groove to regulate movement of the gear relative to the shaft in an axial direction of the shaft. The circlip extends in circumferential direction on the outer surface of the shaft.

The circlip has a cross section in a circular shape perpendicular to the extending direction along the circumferential direction on the outer surface of the shaft.

The transmission includes a shaft, a gear, and a circlip. The shaft has a groove. The gear has a through hole into which the shaft is inserted. The gear is supported by the shaft. The circlip is fitted into the groove. The circlip regulates the movement of the gear relative to the shaft in the axial direction of the shaft.

The circlip has a cross section. The cross section of the circlip is circular. Therefore, the circlip is unlikely to deform the groove. Even when the gear hits the circlip, the circlip is unlikely to deform the groove. Accordingly, the circlip is unlikely to disengage from the groove. In other words, it is easy to prevent the disengagement of the circlip from the groove. Therefore, it is easy for the circlip to regulate the movement of the gear described above.

In summary, in the present transmission, it is easy to prevent the disengagement of the circlip. Therefore, in the present transmission, it is easy to regulate the movement of the gear relative to the shaft in the axial direction of the shaft.

In the transmission described above,
when the circlip is fitted into the groove, half or more of the circlip with regard to the radial direction of the shaft is preferably accommodated in the groove.

Therefore, it is easier to prevent the disengagement of the circlip from the groove.

In the transmission described above,
a depth of the groove with regard to the radial direction of the shaft is preferably 50% or more of a diameter of the cross section of the circlip and smaller than the diameter of the cross section of the circlip.

The depth of the groove with regard to the radial direction of the shaft is 50% or more of the diameter of the cross section of the circlip. Therefore, it is easy to accomm odate half or more of the circlip in the groove. The depth of the groove is smaller than the diameter of the cross section of the circlip. Therefore, it is impossible for the groove to accommodate the entire circlip. In this way, when the circlip is fitted into the groove, a part of the circlip always protrudes from the groove. When the circlip is fitted into the groove, the part of the circlip always protrudes outward in a radial direction of an axis of the shaft from the groove. Accordingly, it is easy for the circlip to regulate the movement of the gear relative to the shaft in the axial direction of the shaft.

In the transmission described above,
the depth of the groove with regard to the radial direction of the shaft is preferably 60% or less of the diameter of the cross section of the circlip.

Therefore, when the circlip is fitted into the groove, a portion of the circlip protruding from the groove is sufficiently large. Therefore, it is easy for the circlip to regulate the movement of the gear relative to the shaft in the axial direction of the shaft.

In the transmission described above,
in a cross section along the axis of the shaft, the groove is preferably semicircular.

Therefore, the groove is appropriately in contact with the circlip. It is easy to increase a contact range between the circlip and the groove. In this way, it is more unlikely for the circlip to deform the groove. Accordingly, it is easier to prevent the disengagement of the circlip from the groove.

In the transmission described above,
it is preferable that the groove includes an arc portion and a linear portion, and the arc portion and the linear portion are continuous in direction of the axis of the shaft.

Therefore, it is easy to form the groove.

In the transmission described above,
the shaft and the gear are preferably coupled by press fit.
In other words, in the transmission described above,
the shaft is preferably press-fitted into the through hole.

Therefore, when a relatively large force is applied to the gear, the gear may move relative to the shaft in the axial direction of the shaft, and the gear may move relative to the shaft around the axis of the shaft. When the gear moves relative to the shaft in the axial direction of the shaft and the gear moves relative to the shaft around the axis of the shaft, the gear causes a thrust force and a rotational force to simultaneously act on the circlip. The thrust force is a force in the axial direction of the shaft. The rotational force is a force around the axis of the shaft. As described above, the circlip has a cross section in a circular shape. Therefore, even in a case where the thrust force and the rotational force simultaneously act on the circlip, the circlip is unlikely to deform the groove. In this way, even in the case where the thrust force and the rotational force simultaneously act on the circlip, it is easy to prevent the disengagement of the circlip from the groove. Rather, in the case where the thrust force and the rotational force simultaneously act on the circlip, an effect of the present transmission that prevents the disengagement of the circlip is remarkable.

In the transmission described above,
the gear is preferably a helical gear.

Therefore, the thrust force caused to act on the circlip by the gear may be relatively large. As described above, the circlip has the cross section in the circular shape. Therefore, even in a case where a relatively large thrust force acts on the circlip, the circlip is unlikely to deform the groove. In this way, even in the case where the relatively large thrust force acts on the circlip, it is easy to prevent the disengagement of the circlip from the groove. Rather, in the case where the relatively large thrust force acts on the circlip, the effect of the present transmission that prevents the disengagement of the circlip is remarkable.

In the transmission described above,
it is preferable that the through hole has a first end with regard to the direction of the axis of the shaft facing the circlip, and the gear has a chamfer that enlarges a diameter of the first end toward the circlip.

Therefore, the chamfer shifts a contact position between the gear and the circlip outward in a radial direction of a shaft center of the shaft. In this way, when the gear hits the circlip, it is easier to prevent the disengagement of the circlip from the groove.

In the transmission described above,
it is preferable that the chamfer has an outer peripheral edge with regard to the radial direction of the shaft, the circlip has an outer peripheral edge with regard to the radial direction of the shaft, and when the circlip is fitted into the groove, the outer peripheral edge of the chamfer is located inward with respect to the outer peripheral edge of the circlip with regard to the radial direction of the shaft.

[Function and effect] Therefore, the chamfer is small. In this way, it is easy to prevent the gear from increasing in size.

In the transmission described above,
in the cross section along the axis of the shaft, an angle between the chamfer and the shaft is preferably 45 degrees or less.

Therefore, when the gear hits the circlip, the force caused to act on the circlip by the gear increases in a relatively slow manner. In this way, when the gear hits the circlip, a force caused to act on the groove by the circlip increases in a relatively slow manner. In this way, even in a case where the gear hits the circlip, it is more unlikely for the circlip to deform the groove. Accordingly, it is easier to prevent the disengagement of the circlip from the groove.

In the transmission described above,
it is preferable that the chamfer has an inner peripheral edge with regard to the radial direction of the shaft, and the inner peripheral edge is in contact with the shaft.

Therefore, the contact range between the gear and the shaft in the axial direction of the shaft does not decrease due to the chamfer. In this way, it is easy to suppress a decrease in a contact area between the gear and the shaft.

In the transmission described above,
it is preferable that the chamfer has a first length in the axial direction of the shaft, and the first length is shorter than the diameter of the cross section of the circlip.

Therefore, it is easy to reduce a size of the chamfer. In this way, it is easy to prevent the gear from increasing in size.

In the transmission described above,
it is preferable that the circlip is in direct contact with the groove.

Therefore, it is easy to reduce the depth of the groove. Accordingly, it is easy to maintain a strength of the shaft.

The present teaching is also directed to a straddled vehicle including the transmission described above.

The straddled vehicle includes the transmission. The transmission includes the circlip. As described above, it is easy to prevent the disengagement of the circlip.

For the purpose of illustrating the present teaching, there are shown in the drawings several forms which are presently preferred, it being understood.

### Brief Description of Drawings

FIG. 1 is a left side view of a straddled vehicle according to an embodiment;
FIG. 2 is a cross-sectional view taken along line II-II in FIG. 1;
FIG. 3 is a cross-sectional view of a speed reducer;
FIG. 4A is a cross-sectional view of a part of a gear;
FIG. 4B is a side view of a part of the gear;
FIG. 5 is a cross-sectional view of parts of the shaft and the gear;
FIG. 6A is a plan view of a circlip;
FIG. 6B is a front view of the circlip;
FIG. 6C is a cross-sectional view of the circlip taken along line c-c in FIG. 6A;
FIG. 7 is a cross-sectional view of parts of the shaft, the gear, and the circlip;
FIG. 8 is a cross-sectional view of parts of the shaft, the gear, and the circlip;
FIG. 9 is a cross-sectional view of parts of the shaft and the gear according to a modified embodiment; and
FIG. 10 is a cross-sectional view of parts of the shaft and the gear according to a modified embodiment.

### Description of Embodiments

Hereinafter, the straddled vehicle according to the present teaching will be described with reference to the drawings.

### 1. Schematic configuration of straddled vehicle 1

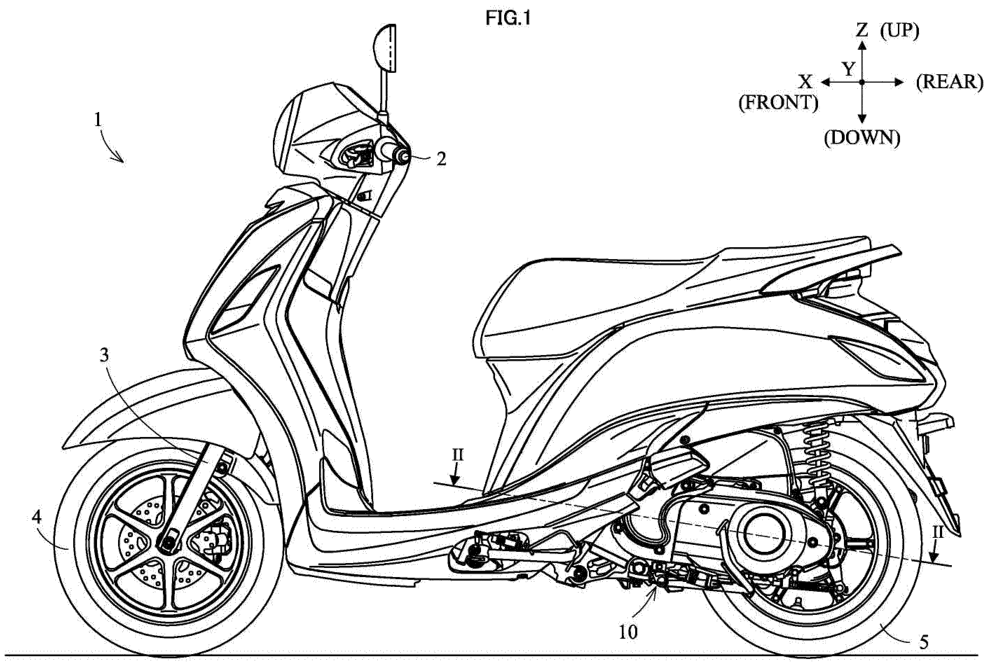

FIG. 1 is a left side view of a straddled vehicle 1 according to an embodiment. A schematic configuration of the straddled vehicle 1 will be described.

FIG. 1 illustrates a front-rear direction X, a transverse direction Y, and an up-down direction Z of the straddled vehicle 1. The front-rear direction X, the transverse direction Y, and the up-down direction Z are defined with reference to a driver (also referred to as a rider) riding on the straddled vehicle 1. The front-rear direction X, the transverse direction Y, and the up-down direction Z are orthogonal to each other. The front-rear direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. Unless otherwise stated in this specification, "forward" and "rearward" include not only directions parallel to the front-rear direction X but also directions close to the front-rear direction X. The directions close to the front-rear direction X are, for example, directions at angles not exceeding 45 degrees to the front-rear direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

The straddled vehicle 1 includes a handlebar 2, a front fork 3, and a front wheel 4. The front fork 3 is connected to the handlebar 2. The front fork 3 extends downward and forward from the handlebar 2. The front wheel 4 is supported by a lower portion of the front fork 3. The front wheel 4 is rotatable with respect to the front fork 3.

The straddled vehicle 1 includes a power unit 10 and a rear wheel 5. The rear wheel 5 is supported by the power unit 10. The rear wheel 5 is supported by a rear portion of the power unit 10. The power unit 10 rotationally drives the rear wheel 5. The power unit 10 is supported by a vehicle body frame which is not illustrated. The power unit 10 swings with respect to the vehicle body frame. The power unit 10 extends rearward from the vehicle body frame.

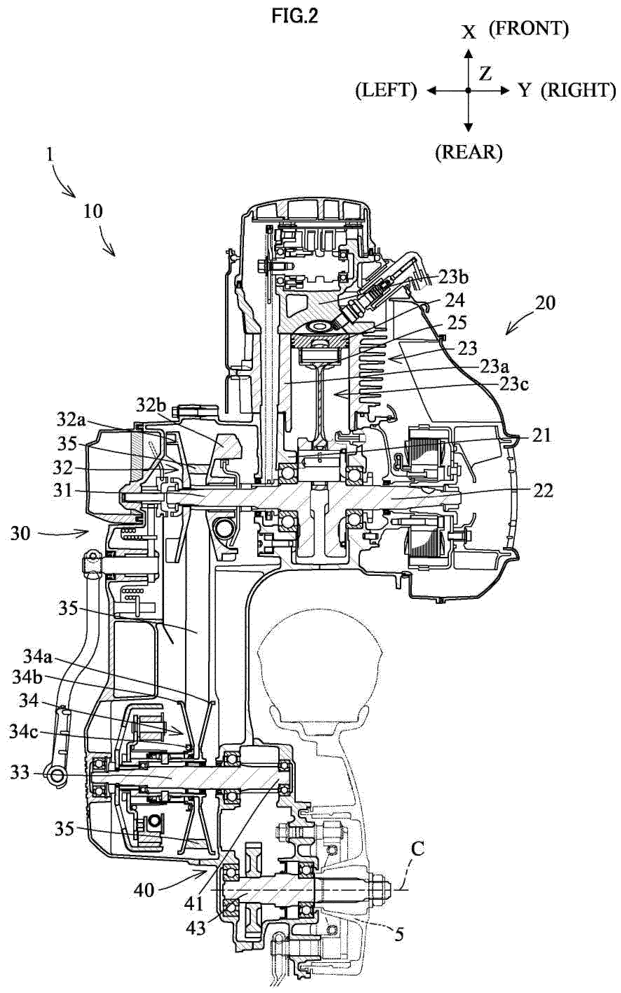

FIG. 2 is a cross-sectional view of the power unit 10 taken along line II-II in FIG. 1. The power unit 10 includes an engine 20 and a transmission 30. The engine 20 generates power. The transmission 30 transmits power from the engine 20 to the rear wheel 5. The power transmitted to the rear wheel 5 rotates the rear wheel 5.

The engine 20 includes a crankcase 21, a crankshaft 22, and a cylinder unit 23. The crankcase 21 accommodates the crankshaft 22. The cylinder unit 23 is disposed in front of the crankcase 21. The cylinder unit 23 is connected to the crankcase 21. The cylinder unit 23 extends forward from the crankcase 21.

The cylinder unit 23 includes a cylinder body 23a, a cylinder head 23b, and a cylinder hole 23c. The cylinder head 23b is connected to the cylinder body 23a. The cylinder body 23a is connected to the crankcase 21. The cylinder hole 23c is formed in the cylinder body 23a. The cylinder hole 23c is a space.

The engine 20 includes a piston 24 and a connecting rod 25. The piston 24 is accommodated in the cylinder hole 23c. The piston 24 slides in the cylinder hole 23c. The piston 24 is connected to the connecting rod 25. The connecting rod 25 is connected to the crankshaft 22. The piston 24 is connected to the crankshaft 22 via the connecting rod 25. The power of the engine 20 is output through the crankshaft 22.

The transmission 30 includes a primary shaft 31, a primary pulley 32, a secondary shaft 33, a secondary pulley 34, and a V-belt 35. The primary shaft 31 is connected to the crankshaft 22. The primary shaft 31 is integral with the crankshaft 22. The primary shaft 31 supports the primary pulley 32. The secondary shaft 33 is arranged parallel to the primary shaft 31. The secondary shaft 33 supports the secondary pulley 34. The V-belt 35 is wound around the primary pulley 32 and the secondary pulley 34.

The primary pulley 32 has a primary fixed sheave 32a and a primary movable sheave 32b. The primary fixed sheave 32a is fixed to the primary shaft 31. The primary fixed sheave 32a does not move relative to the primary shaft 31. The primary fixed sheave 32a rotates together with the primary shaft 31.

The primary movable sheave 32b is arranged opposite to the primary fixed sheave 32a. The primary movable sheave 32b is movably supported by the primary shaft 31 with respect to the primary shaft 31. The primary movable sheave 32b is movable in an axial direction of the primary shaft 31. The primary movable sheave 32b rotates together with the primary shaft 31.

The primary movable sheave 32b moves in the axial direction relative to the primary shaft 31, whereby an interval between the primary fixed sheave 32a and the primary movable sheave 32b changes. In this way, a winding diameter of the V-belt 35 around the primary pulley 32 changes.

The secondary pulley 34 includes a secondary fixed sheave 34a and a secondary movable sheave 34b. The secondary fixed sheave 34a is fixed to the secondary shaft 33. The secondary fixed sheave 34a does not move relative to the secondary shaft 33. The secondary fixed sheave 34a rotates together with the secondary shaft 33.

The secondary movable sheave 34b is arranged opposite to the secondary fixed sheave 34a. The secondary movable sheave 34b is movably supported by the secondary shaft 33 with respect to the secondary shaft 33. The secondary movable sheave 34b is movable in an axial direction of the secondary shaft 33. The secondary movable sheave 34b rotates together with the secondary shaft 33.

The secondary movable sheave 34b moves in the axial direction relative to the secondary shaft 33, whereby an interval between the secondary fixed sheave 34a and the secondary movable sheave 34b changes. In this way, a winding diameter of the V-belt 35 around the secondary pulley 34 changes.

The secondary pulley 34 includes a spring 34c. The spring 34c energizes the secondary movable sheave 34b toward the secondary fixed sheave 34a.

By changing the winding diameter of the V-belt 35 around the primary pulley 32 and the secondary pulley 34, the transmission 30 changes a gear ratio. The gear ratio is a ratio of a rotation speed of the primary shaft 31 to a rotation speed of the secondary shaft 33.

The transmission 30 includes a speed reducer 40. The speed reducer 40 transmits power from the secondary shaft 33 to the rear wheel 5.

The speed reducer 40 includes an input shaft 41 and an output shaft 43. The speed reducer 40 transmits power from the input shaft 41 to the output shaft 43.

The input shaft 41 is connected to the secondary shaft 33. The input shaft 41 is integral with the secondary shaft 33.

The output shaft 43 is arranged in parallel with the input shaft 41. The speed reducer 40 rotatably supports the output shaft 43. The output shaft 43 is rotatable around an axis C. The axis C is a central axis of the output shaft 43. The output shaft 43 is connected to the rear wheel 5. The output shaft 43 supports the rear wheel 5. The output shaft 43 is a drive shaft for rotating the rear wheel 5. The rear wheel 5 rotates together with the output shaft 43.

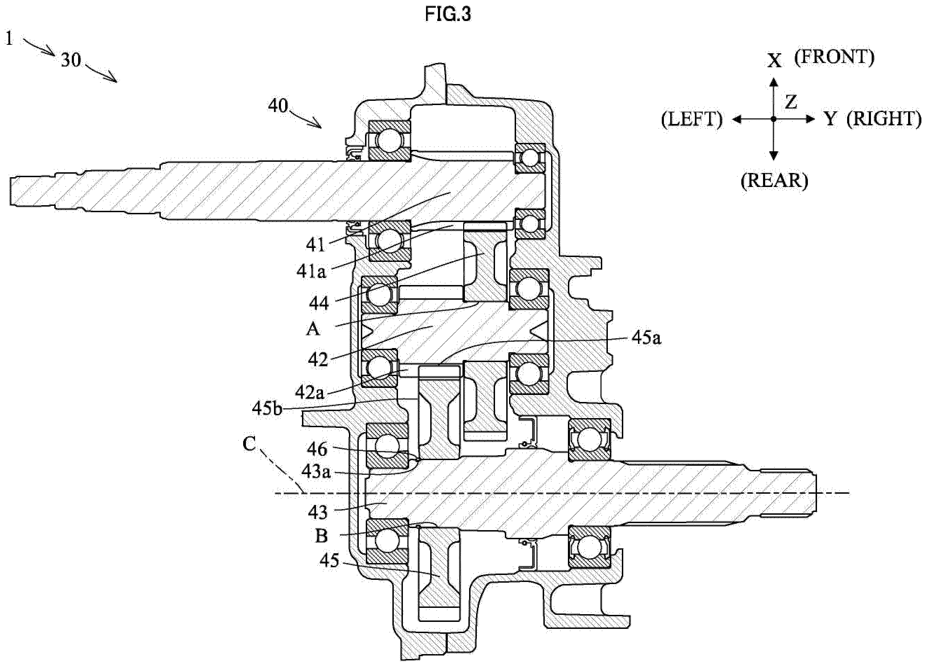

FIG. 3 is a cross-sectional view of the speed reducer 40. The speed reducer 40 includes an intermediate shaft 42. The intermediate shaft 42 is arranged between the input shaft 41 and the output shaft 43. The intermediate shaft 42 connects the input shaft 41 and the output shaft 43. The power is transmitted from the input shaft 41 to the output shaft 43 through the intermediate shaft 42.

The speed reducer 40 includes a gear 41a and a first gear 44. The gear 41a is formed integrally with the input shaft 41. The first gear 44 is supported by the intermediate shaft 42. Specifically, the first gear 44 has a through hole A. The through hole A is a space. The intermediate shaft 42 is inserted into the through hole A. The first gear 44 meshes with the gear 41a. The input shaft 41 and the intermediate shaft 42 are connected via the gear 41a and the first gear 44.

The speed reducer 40 includes a gear 42a and a second gear 45. The gear 42a is formed on the intermediate shaft 42. The second gear 45 is supported by the output shaft 43. Specifically, the second gear 45 has a through hole B. The through hole B is a space. The output shaft 43 is inserted into the through hole B. The second gear 45 meshes with the gear 42a of the intermediate shaft 42. The intermediate shaft 42 and the output shaft 43 are connected via the gear 42a and the second gear 45.

The second gear 45 has an outer peripheral face 45a. The outer peripheral face 45a extends in a circumferential direction of the axis C. The outer peripheral face 45a is in contact with the gear 42a. The outer peripheral face 45a has teeth for meshing with the gear 42a. When power is transmitted between the gear 42a and the second gear 45, a rotational force acts on the second gear 45. The rotational force is a force around the axis C.

Hereinafter, a direction around the axis C of the output shaft 43 is appropriately referred to as a "first rotation direction".

For example, the gear 42a is a helical gear.

For example, the second gear 45 is also a helical gear. Teeth of the second gear 45 are formed obliquely with respect to a central axis of the second gear 45. The teeth of the second gear 45 are formed obliquely with respect to the axis C.

In a case where the second gear 45 is the helical gear, when power is transmitted between the gear 42a and the second gear 45, a rotational force and a thrust force act on the second gear 45. The thrust force is a force in a direction of the axis C. The thrust force is also referred to as a thrust load. The thrust force is also referred to as an axial load.

A direction parallel to the direction of the axis C is appropriately referred to as a "thrust direction".

For example, the output shaft 43 and the second gear 45 are coupled by the press fit. The output shaft 43 is press-fitted into the through hole B. For example, the press fit is strong press fit. For example, the press fit is tight fit.

The second gear 45 is fixed to the output shaft 43 by the press fit. When the second gear 45 is fixed to the output shaft 43, the second gear 45 rotates together with the output shaft 43. When the second gear 45 is fixed to the output shaft 43, the second gear 45 rotates integrally with the output shaft 43. When the second gear 45 is fixed to the output shaft 43, the second gear 45 is unmovable relative to the output shaft 43. When the second gear 45 is fixed to the output shaft 43, the second gear 45 is non-rotatable in a first rotation direction with respect to the output shaft 43. When the second gear 45 is fixed to the output shaft 43, the second gear 45 is unmovable in the thrust direction with respect to the output shaft 43.

However, even in a case where the second gear 45 is fixed to the output shaft 43, if a significantly large impact acts on the second gear 45, the second gear 45 may slide with respect to the output shaft 43. In a case where the output shaft 43 and the second gear 45 are coupled by the press fit, the second gear 45 may slide in the first rotation direction with respect to the output shaft 43. In the case where the output shaft 43 and the second gear 45 are coupled by the press fit, the second gear 45 may slide in the thrust direction with respect to the output shaft 43. In the case where the output shaft 43 and the second gear 45 are coupled by the press fit, the second gear 45 may slide simultaneously in the first rotation direction and the thrust direction with respect to the output shaft 43.

The speed reducer 40 includes a circlip 46. The circlip 46 is attached to the output shaft 43. The circlip 46 regulates movement of the second gear 45 in the thrust direction with respect to the output shaft 43.

The output shaft 43 has a groove 43a. The circlip 46 is fitted into the groove 43a.

The circlip 46 and the second gear 45 are arranged along the axis C. The circlip 46 is arranged, for example, on a left side of the second gear 45.

The circlip 46 is separated from the second gear 45. The circlip 46 is not in contact with the second gear 45. However, if the second gear 45 moves relative to the output shaft 43 in the thrust direction, the second gear 45 hits the circlip 46. In a case where the second gear 45 hits the circlip 46, the circlip 46 stops further movement of the second gear 45 relative to the output shaft 43 in the thrust direction.

The second gear 45 includes a side face 45b. The side face 45b extends in a radial direction of the axis C. The side face 45b is, for example, perpendicular to the axis C.

For example, the circlip 46 faces the side face 45b. If the second gear 45 moves relative to the output shaft 43 in the thrust direction, the circlip 46 hits the side face 45b.

The output shaft 43 corresponds to the shaft of the claims. The second gear 45 corresponds to the gear of the claims.

### 2. Second gear 45

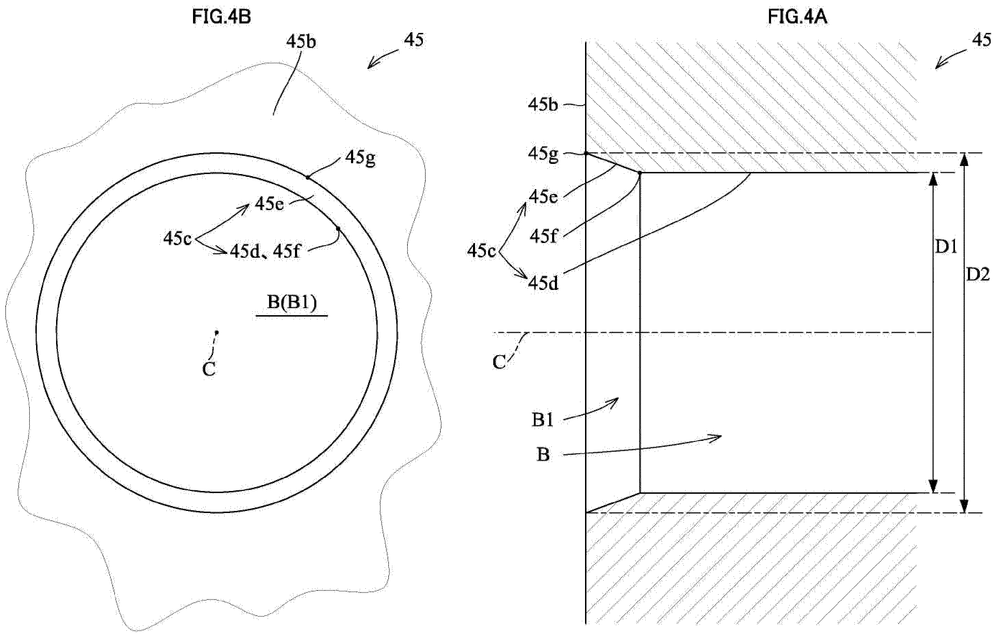

FIG. 4A is a cross-sectional view of a part of the second gear 45. FIG. 4B is a side view of a part of the second gear 45. When viewed from the axis C, the second gear 45 has a substantially annular shape.

The through hole B extends along the axis C. The through hole B has a first end B1. The first end B1 is located near the side face 45b. The first end B1 is a portion of the through hole B.

The second gear 45 includes an inner peripheral face 45c. The inner peripheral face 45c extends in the circumferential direction of the axis C.

The inner peripheral face 45c defines the through hole B. The inner peripheral face 45c is in contact with the through hole B.

The inner peripheral face 45c includes a joint 45d. In a cross section along the axis C, the joint 45d extends linearly. In a cross section parallel to the axis C, the joint 45d is parallel to the axis C.

The joint 45d has an inner diameter D1. The inner diameter D1 is constant along the axis C.

The inner peripheral face 45c further includes a chamfer 45e. In the cross section parallel to the axis C, the chamfer 45e is inclined with respect to the axis C. The chamfer 45e is in a taper shape. The chamfer 45e is an inclined face. For example, in the cross section parallel to the axis C, the chamfer 45e extends linearly. Alternatively, the chamfer 45e may be curved in the cross section parallel to the axis C.

The chamfer 45e defines the first end B1 of the through hole B. The chamfer 45e extends from the joint 45d to the side face 45b.

The chamfer 45e includes an inner peripheral edge 45f. The inner peripheral edge 45f is located at a boundary between the chamfer 45e and the joint 45d. The inner peripheral edge 45f has an inner diameter equal to the inner diameter D1.

The chamfer 45e includes an outer peripheral edge 45g. The outer peripheral edge 45g is located at a boundary between the chamfer 45e and the side face 45b. The outer peripheral edge 45g has an inner diameter D2. The inner diameter D2 is larger than the inner diameter D1.

When viewed from the axis C, the outer peripheral edge 45g is a circle centered on the axis C. When viewed from the axis C, the inner peripheral edge 45f is a circle centered on the axis C. The inner peripheral edge 45f is smaller than the outer peripheral edge 45g. The inner peripheral edge 45f is located inside the outer peripheral edge 45g.

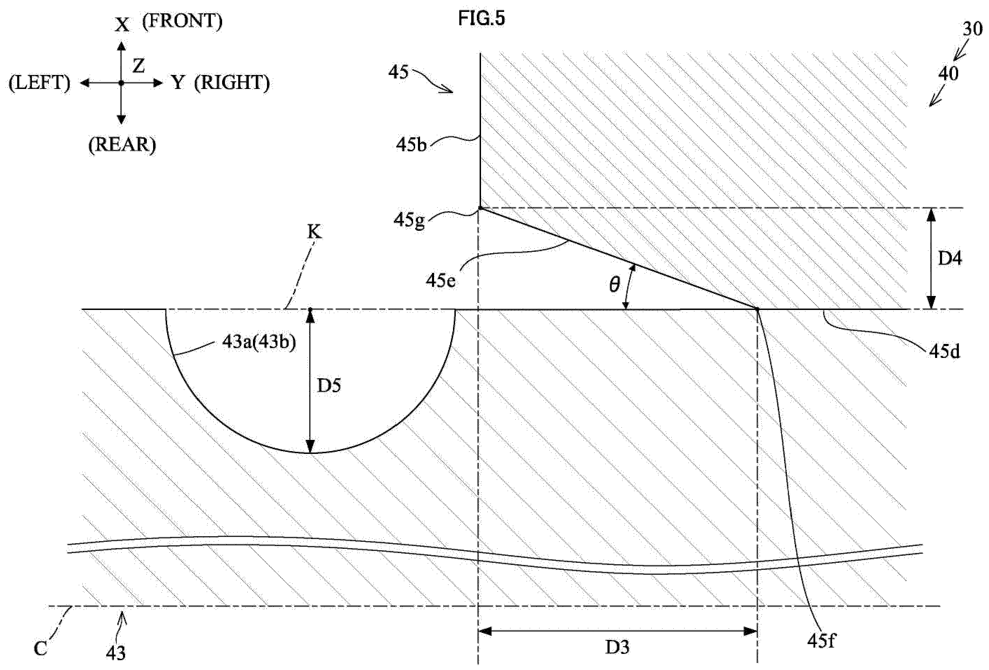

FIG. 5 is a cross-sectional view of parts of the output shaft 43 and the second gear 45. The joint 45d is in contact with the output shaft 43. The joint 45d is joined to the output shaft 43.

The chamfer 45e is not in contact with the output shaft 43. The chamfer 45e is separated from the output shaft 43.

The inner peripheral edge 45f is in contact with the output shaft 43.

The outer peripheral edge 45g is not in contact with the output shaft 43. The outer peripheral edge 45g is separated from the output shaft 43.

The chamfer 45e has an oblique angle θ. The oblique angle θ is an angle between the chamfer 45e and the output shaft 43 in the cross section along the axis C. For example, the oblique angle θ is 45 degrees or less.

The chamfer 45e has a first length D3 and a second length D4. The first length D3 is a length of the chamfer 45e along the axis C. The second length D4 is a length of the chamfer 45e along the radial direction of the axis C. The first length D3 is longer than the second length D4.

### 3. Groove

The groove 43a is formed in an outer peripheral face of the output shaft 43. The groove 43a extends around the axis C of the output shaft 43.

The groove 43a is depressed inward in the radial direction of the axis C from the outer peripheral face of the output shaft 43. The groove 43a is recessed inward in the radial direction of the axis C from the outer peripheral face of the output shaft 43.

FIG. 5 illustrates a boundary K. The boundary K is a virtual curved surface indicating a space between an inner portion of the groove 43a and an outer portion of the groove 43a. The boundary K is located on an extension of the outer peripheral face of the output shaft 43. The groove 43a is depressed inward in the radial direction of the axis C from the boundary K. The groove 43a is recessed inward in the radial direction of the axis C from the boundary K.

The groove 43a has a depth D5. The depth D5 is a length of the groove 43a in the radial direction of the axis C.

The depth D5 is longer than the second length D4.

The depth D5 is shorter than the first length D3.

For example, in the cross section along the axis C, the groove 43a is in a semicircular shape.

Specifically, the groove 43a includes an arc portion 43b. The arc portion 43b has an arc shape in the cross section along the axis C. The arc portion 43b is in a semicircular shape.

The groove 43a does not face the joint 45d. The groove 43a does not face the inner peripheral edge 45f.

### 4. Circlip 46

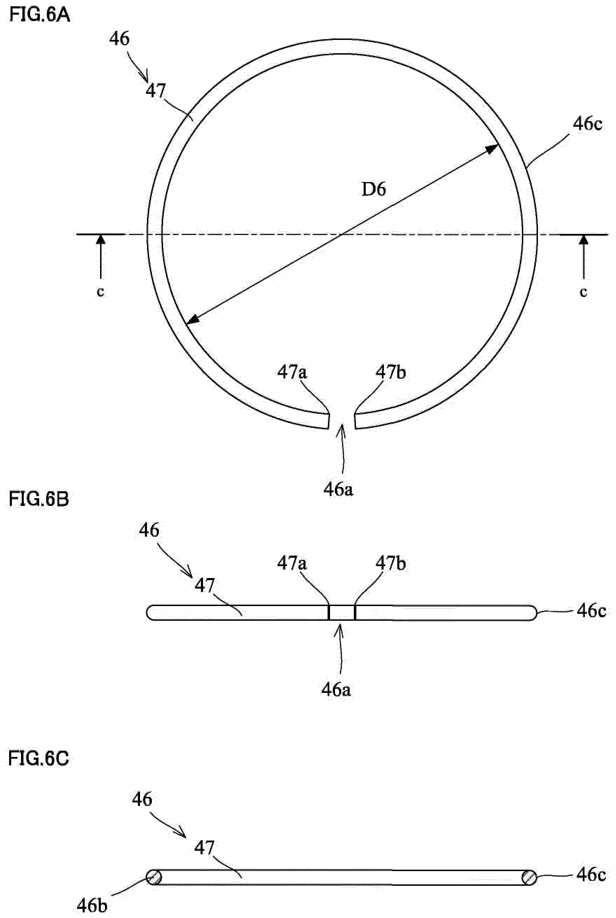

The circlip 46 will be described. FIGS. 6A to 6C are views illustrating the circlip 46. FIG. 6A is a plan view of the circlip 46. FIG. 6B is a front view of the circlip 46. FIG. 6C is a cross-sectional view taken along line c-c in FIG. 6A.

The circlip 46 is one type of retaining ring.

The circlip 46 is formed in an annular shape. The circlip 46 includes a notch 46a formed by cutting out a part of an annular portion of the circlip.

Specifically, the circlip 46 includes a ring 47. The ring 47 forms the notch 46a. The ring 47 has an open end. The ring 47 has a first end 47a and a second end 47b. The second end 47b of the ring 47 is separated from the first end 47a of the ring 47.

The circlip 46 has a cross section 46b in a circular shape. In other words, the ring 47 has a circular cross section.

The circlip 46 is elastic.

The ring 47 is made of metal. The ring 47 is made of a round wire. The ring 47 is obtained by molding the round wire.

The ring 47 is flexible. The ring 47 is semi-flexible. The ring 47 is elastic.

The circlip 46 has an inner diameter D6.

The circlip 46 has an outer peripheral edge 46c.

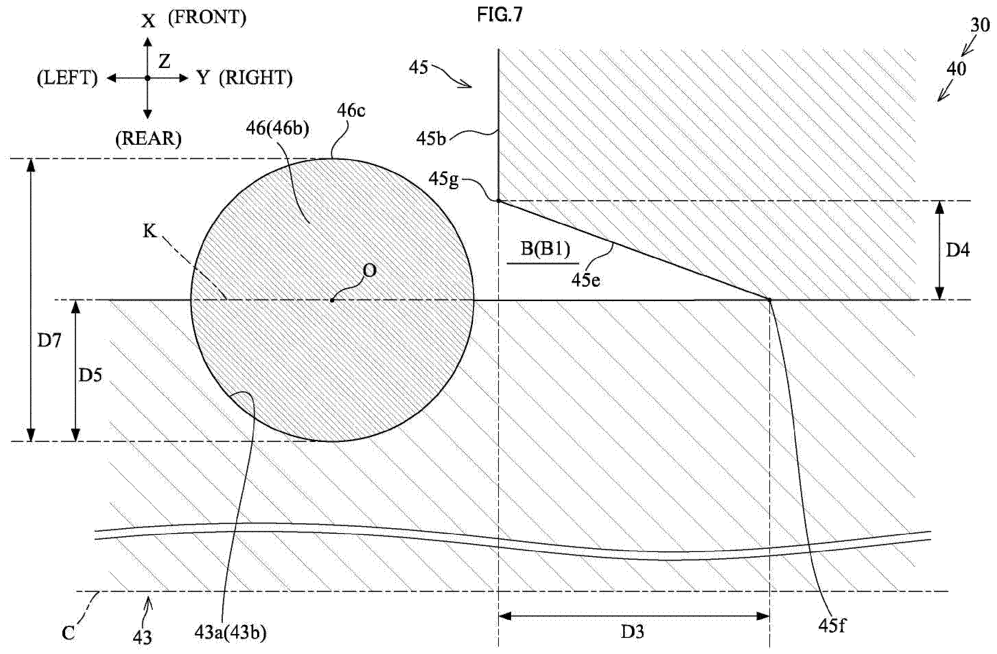

FIG. 7 is a cross-sectional view of parts of the output shaft 43, the second gear 45, and the circlip 46. The circlip 46 is fitted into the groove 43a.

In a state where the circlip 46 is fitted into the groove 43a, the circlip 46 is in direct contact with the groove 43a.

The inner diameter D6 of the circlip 46 in an unloaded state is slightly smaller than a diameter of the groove 43a of the output shaft 43. Therefore, when the circlip 46 is attached to the groove 43a, the inner diameter D6 slightly increases. The circlip 46 exerts an elastic force to reduce the inner diameter D6. In this way, the circlip 46 pushes the groove 43a inward in the radial direction of the axis C. In a state where the circlip 46 is attached to the groove 43a, the circlip 46 pushes the groove 43a by an elastic restoring force of the circlip 46.

In the state where the circlip 46 is fitted into the groove 43a, half or more of the circlip 46 is accommodated in the groove 43a. In the state where the circlip 46 is fitted into the groove 43a, another part of the circlip 46 is located outside the groove 43a. In the state where the circlip 46 is fitted into the groove 43a, another part of the circlip 46 protrudes from the groove 43a.

The cross section 46b of the circlip 46 has a diameter D7. The depth D5 of the groove 43a is 50% or more of the diameter D7.

The depth D5 is smaller than the diameter D7.

For example, the depth D5 is smaller than or equal to 60% of the diameter D7.

The cross section 46b of the circlip 46 has a center O.

For example, in the state where the circlip 46 is fitted into the groove 43a, the center O is located at the boundary K. In other words, in the state where the circlip 46 is fitted into the groove 43a, the center O is arranged at the same position as that of the outer peripheral face of the output shaft 43 in the radial direction of the axis C.

Alternatively, in the state where the circlip 46 is fitted into the groove 43a, the center O is located inside the groove 43a. In other words, in the state where the circlip 46 is fitted into the groove 43a, the center O is located inward in the radial direction of the axis C with respect to the boundary K.

The circlip 46 is separated from the second gear 45. The circlip 46 is not in contact with the second gear 45.

The circlip 46 and the side face 45b are separated from each other in the direction of the axis C. For example, the entire circlip 46 is arranged on a left side of the side face 45b. Alternatively, the entire circlip 46 may be arranged on a right side of the side face 45b.

The circlip 46 faces the side face 45b.

The circlip 46 faces the chamfer 45e.

The circlip 46 faces the first end B1 of the through hole B.

An inner diameter of the chamfer 45e increases toward the circlip 46.

The chamfer 45e causes a diameter of the first end B1 to increase toward the circlip 46.

An outer diameter of the circlip 46 is larger than a diameter of the inner peripheral edge 45f of the chamfer 45e.

In the state where the circlip 46 is fitted into the groove 43a, the outer peripheral edge 46c of the circlip 46 is located outward in the radial direction of the axis C with respect to the inner peripheral edge 45f of the chamfer 45e. In other words, when the circlip 46 is fitted into the groove 43a, the inner peripheral edge 45f is located inward in the radial direction of the axis C with respect to the outer peripheral edge 46c.

The outer diameter of the circlip 46 is larger than a diameter of the outer peripheral edge 45g of the chamfer 45e.

In the state where the circlip 46 is fitted into the groove 43a, the outer peripheral edge 46c of the circlip 46 is located outward in the radial direction of the axis C with respect to the outer peripheral edge 45g of the chamfer 45e. In other words, when the circlip 46 is fitted into the groove 43a, the outer peripheral edge 45g is located inward in the radial direction of the axis C with respect to the outer peripheral edge 46c.

The first length D3 of the chamfer 45e is shorter than the diameter D7 of the cross section 46b.

The second length D4 of the chamfer 45e is shorter than the diameter D7.

The second length D4 is shorter than half of the diameter D7. The half of the diameter D7 corresponds to a radius of the cross section 46b.

Sum of the second length D4 and the depth D5 is smaller than the diameter D7.

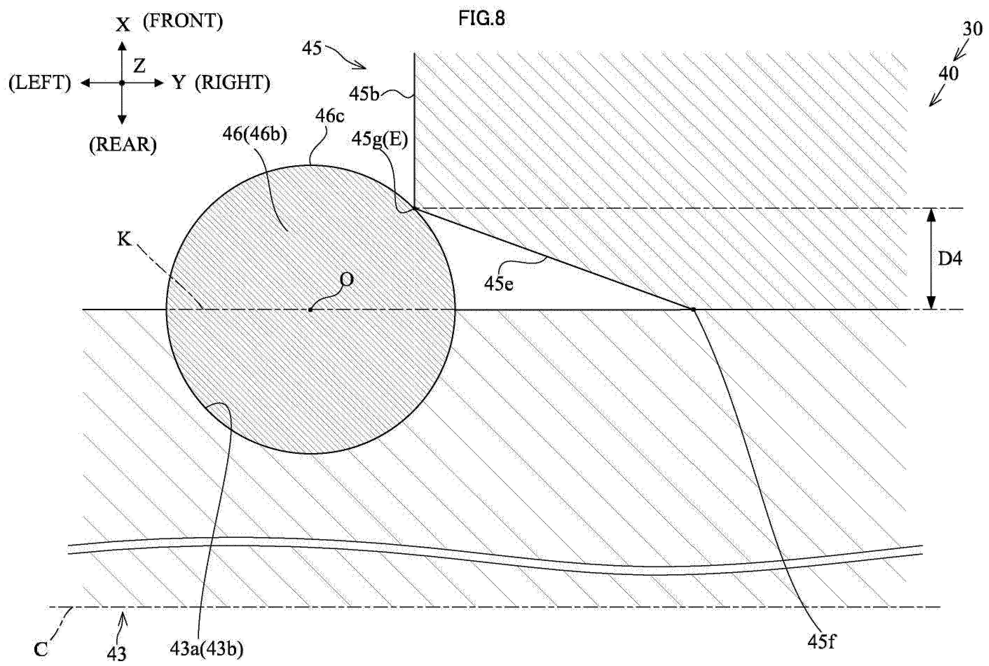

FIG. 8 is a cross-sectional view of parts of the output shaft 43, the second gear 45, and the circlip 46. In FIG. 8, the second gear 45 hits the circlip 46.

The second gear 45 may slide with respect to the output shaft 43. The second gear 45 may move relative to the output shaft 43. A cause of the movement of the second gear 45 is, for example, an excessively large force or an excessively large torque input to the second gear 45. For example, the gear 42a may cause the excessively large force or the excessively large torque to act on the second gear 45. For example, the output shaft 43 may cause the excessively large force or the excessively large torque to act on the second gear 45.

In a case where the second gear 45 moves relative to the output shaft 43 in the thrust direction, the second gear 45 may hit the circlip 46. When the second gear 45 hits the circlip 46, the second gear 45 causes the thrust force to act on the circlip 46.

As described above, in the case where the output shaft 43 and the second gear 45 are coupled by the press fit, the second gear 45 may slide simultaneously in the first rotation direction and the thrust direction with respect to the output shaft 43. Therefore, when the second gear 45 hits the circlip 46, the second gear 45 may cause the thrust force and the rotational force to simultaneously act on the circlip 46.

When the second gear 45 hits the circlip 46, the outer peripheral edge 45g is in contact with the circlip 46.

FIG. 8 illustrates a contact position E between the second gear 45 and the circlip 46. The contact position E is shifted outward in the radial direction of the axis C. The contact position E is shifted outward in the radial direction of the axis C by the second length D4.

Specifically, the contact position E is located outward in the radial direction of the axis C with respect to the boundary K. In other words, the contact position E is located outward in the radial direction of the axis C with respect to the outer peripheral face of the output shaft 43. For example, the contact position E is located outward in the radial direction of the axis C with respect to the center O.

### 5. Effects of embodiment

The transmission 30 includes the output shaft 43, the second gear 45, and the circlip 46. The output shaft 43 has a groove 43a. The second gear 45 has the through hole B into which the output shaft 43 is inserted. The second gear 45 is supported by the output shaft 43. The circlip 46 is fitted into the groove 43a. The circlip 46 regulates the movement of the second gear 45 relative to the output shaft 43 in the direction of the axis C of the output shaft 43.

The circlip 46 has the cross section 46b. The cross section 46b of the circlip 46 is circular. Therefore, the circlip 46 is unlikely to deform the groove 43a. Even when the second gear 45 hits the circlip 46, the circlip 46 is unlikely to deform the groove 43a. Even when the thrust force acts on the circlip 46, the circlip 46 is unlikely to deform the groove 43a. Accordingly, the circlip 46 is unlikely to disengage from the groove 43a. In other words, it is easy to prevent the disengagement of the circlip 46 from the groove 43a. Therefore, it is easy for the circlip 46 to regulate the movement of the second gear 45 described above. It is easy for the circlip 46 to regulate the above-described movement of the second gear 45 with a simple structure.

In summary, in the present transmission 30, it is easy to prevent the disengagement of the circlip 46. Therefore, in the present transmission 30, it is easy to regulate the movement of the second gear 45 relative to the output shaft 43 in the direction of the axis C of the output shaft 43.

As described above, the circlip 46 has the cross section in the circular shape. Therefore, it is easy for the circlip 46 to regulate the above-described movement of the second gear 45 with an inexpensive and highly reliable structure.

For example, the circlip 46 has the circular cross section 46b. Therefore, the circlip 46 can be molded at low cost. In this way, it is easy to reduce cost of the structure for regulating the above-described movement of the second gear 45.

For example, the circlip 46 has the circular cross section 46b. Therefore, the depth D5 of the groove 43a of the output shaft 43 can be made shallow. Therefore, a strength of the output shaft 43 does not excessively decrease. In this way, the structure for regulating the movement of the second gear 45 is highly reliable.

When the circlip 46 is fitted into the groove 43a, half or more of the circlip 46 is accommodated in the groove 43a. Therefore, it is easier to prevent the disengagement of the circlip 46 from the groove 43a.

Specifically, when the second gear 45 hits the circlip 46, the contact position E between the second gear 45 and the circlip 46 is shifted outward in the radial direction of the axis C. For example, the contact position E is located outward in the radial direction of the axis C with respect to the center O. Therefore, when the second gear 45 hits the circlip 46, the circlip 46 is easily pushed inward in the radial direction of the axis C by the second gear 45. In this way, when the second gear 45 hits the circlip 46, the circlip 46 is easily pushed toward the groove 43a. Accordingly, it is easier to prevent the disengagement of the circlip 46 from the groove 43a.

The depth D5 of the groove 43a is 50% or more of the diameter D7 of the cross section 46b of the circlip 46 and smaller than the diameter D7 of the cross section 46b of the circlip 46.

The depth D5 is 50% or more of the diameter D7. Therefore, it is easy to accommodate the half or more of the circlip 46 in the groove 43a.

The depth D5 is smaller than the diameter D7. Therefore, it is impossible for the groove 43a to accommodate the entire circlip 46. In this way, when the circlip 46 is fitted into the groove 43a, a part of the circlip 46 always protrudes from the groove 43a. When the circlip 46 is fitted into the groove 43a, the part of the circlip 46 always protrudes outward in the radial direction of the axis C from the groove 43a. Accordingly, when the circlip 46 is fitted into the groove 43a, the circlip 46 always regulates the movement of the second gear 45 relative to the output shaft 43 in the direction of the axis C.

The depth D5 is 60% or less of the diameter D7. Therefore, when the circlip 46 is fitted into the groove 43a, a portion of the circlip 46 protruding from the groove 43a is sufficiently large. Therefore, it is easy for the circlip 46 to regulate the movement of the second gear 45 relative to the output shaft 43 in the direction of the axis C.

As described above, the depth D5 is 60% or less of the diameter D7. Therefore, the depth D5 of the groove 43a is relatively shallow. In this way, the strength of the output shaft 43 does not excessively decrease. It is possible to suppress a decrease in the strength of the output shaft 43 due to formation of the groove 43a in the output shaft 43.

In the cross section along the axis C, the groove 43a is semicircular. Therefore, the groove 43a is appropriately in contact with the circlip 46. It is easy to increase a contact range between the circlip 46 and the groove 43a. In this way, it is more unlikely for the circlip 46 to deform the groove 43a. Accordingly, it is easier to prevent the disengagement of the circlip 46 from the groove 43a.

The output shaft 43 and the second gear 45 are coupled by the press fit. In other words, the output shaft 43 is press-fitted into the through hole B. Therefore, when a relatively large force is applied to the second gear 45, the second gear 45 may move relative to the output shaft 43 in the direction of the axis C, and the second gear 45 may move relative to the output shaft 43 around the axis C of the output shaft 43. When the second gear 45 moves relative to the output shaft 43 in the direction of the axis C and the second gear 45 moves relative to the output shaft 43 around the axis C, the second gear 45 causes the thrust force and the rotational force to simultaneously act on the circlip 46. As described above, the circlip 46 has the cross section 46b in the circular shape. Therefore, even in a case where the thrust force and the rotational force simultaneously act on the circlip 46, the circlip 46 is unlikely to deform the groove 43a. In this way, even in the case where the thrust force and the rotational force simultaneously act on the circlip 46, it is easy to prevent the disengagement of the circlip 46 from the groove 43a. Rather, in the case where the thrust force and the rotational force simultaneously act on the circlip 46, an effect of the present transmission that prevents the disengagement of the circlip 46 is remarkable.

When the relatively large force is applied to the second gear 45, it may be impossible to maintain the coupling due to the press fit between the output shaft 43 and the second gear 45. When the coupling due to the press fit between the output shaft 43 and the second gear 45 cannot be maintained, the second gear 45 moves relative to the output shaft 43. For example, when the coupling due to the press fit between the output shaft 43 and the second gear 45 cannot be maintained, the second gear 45 moves relative to the output shaft 43 in the thrust direction. For example, when the coupling due to the press fit between the output shaft 43 and the second gear 45 cannot be maintained, the second gear 45 moves relative to the output shaft 43 in the first rotation direction. For example, when the coupling due to the press fit between the output shaft 43 and the second gear 45 cannot be maintained, the second gear 45 may move relative to the output shaft 43 simultaneously in the thrust direction and the first rotation direction. Therefore, the second gear 45 may cause the thrust force and the rotational force to simultaneously act on the circlip 46. As described above, the circlip 46 has the cross section 46b in the circular shape. Therefore, even in the case where the thrust force and the rotational force simultaneously act on the circlip 46, in the present transmission 30, the circlip 46 is unlikely to deform the groove 43a. Accordingly, even in the case where the thrust force and the rotational force simultaneously act on the circlip 46, it is easy to prevent the disengagement of the circlip 46 from the groove 43a. Rather, in the case where the thrust force and the rotational force simultaneously act on the circlip 46, the effect of the present transmission 30 that prevents the disengagement of the circlip 46 is remarkable.

The second gear 45 is a helical gear. Therefore, the thrust force caused to act on the circlip 46 by the second gear 45 may be relatively large. As described above, the circlip 46 has the cross section 46b in the circular shape. Therefore, even in a case where a relatively large thrust force acts on the circlip 46, the circlip 46 is unlikely to deform the groove 43a. In this way, even in the case where the relatively large thrust force acts on the circlip 46, it is easy to prevent the disengagement of the circlip 46 from the groove 43a. Rather, in the case where the relatively large thrust force acts on the circlip 46, the effect of the present transmission 30 that prevents the disengagement of the circlip 46 is remarkable.

The through hole B has a first end B1. The first end B1 faces the circlip 46. The second gear 45 has the chamfer 45e. The chamfer 45e increases an inner diameter of the first end B1 toward the circlip 46.

Therefore, the chamfer 45e shifts the contact position E outward in the radial direction of the axis C. In this way, when the second gear 45 hits the circlip 46, it is easier to prevent the disengagement of the circlip 46 from the groove 43a.

Specifically, when the second gear 45 hits the circlip 46, the contact position E between the second gear 45 and the circlip 46 is shifted outward in the radial direction of the axis C. For example, the contact position E is located outward in the radial direction of the axis C with respect to the center O. Therefore, when the second gear 45 hits the circlip 46, the circlip 46 is easily pushed inward in the radial direction of the axis C by the second gear 45. In this way, when the second gear 45 hits the circlip 46, the circlip 46 is easily pushed toward the groove 43a. Accordingly, when the second gear 45 hits the circlip 46, it is easier to prevent the disengagement of the circlip 46 from the groove 43a.

As described above, the second gear 45 has the chamfer 45e. Therefore, the output shaft 43 is easily press-fitted into the through hole B of the second gear 45. It is easy to fit the output shaft 43 into the second gear 45. It is easy to align the output shaft 43 and the second gear 45 when coupling the output shaft 43 and the second gear 45.

Incidentally, the gear may have the chamfer from the beginning to couple the gear with the shaft. In a case where the gear has the chamfer from the beginning, the gear can be used as the second gear 45 without changing a shape of the gear. For example, the gear can be used as the second gear 45 without changing a design of the gear or machining the gear.

The chamfer 45e has the outer peripheral edge 45g. The circlip 46 has an outer peripheral edge 46c. When the circlip 46 is fitted into the groove 43a, the outer peripheral edge 45g is located inward with respect to the outer peripheral edge 46c.

Therefore, the chamfer 45e is small. In this way, it is easy to prevent the second gear 45 from increasing in size.

In the cross section along the axis C, an angle θ between the chamfer 45e and the output shaft 43 is 45 degrees or less.

Therefore, when the second gear 45 hits the circlip 46, a force caused to act on the circlip 46 by the second gear 45 increases in a relatively slow manner. In this way, when the second gear 45 hits the circlip 46, a force caused to act on the groove 43a by the circlip 46 increases in a relatively slow manner. In this way, even in a case where the second gear 45 hits the circlip 46, it is more unlikely for the circlip 46 to deform the groove 43a. Accordingly, it is easier to prevent the disengagement of the circlip 46 from the groove 43a.

The chamfer 45e has the inner peripheral edge 45f. The inner peripheral edge 45f is in contact with the output shaft 43.

Therefore, a contact range between the second gear 45 and the output shaft 43 in the direction of the axis C does not decrease due to the chamfer 45e. In this way, it is easy to suppress a decrease in a contact area between the second gear 45 and the output shaft 43.

The chamfer 45e has the first length D3 in the direction of the axis C. The first length D3 is shorter than the diameter D7 of the cross section 46b of the circlip 46.

Therefore, it is easy to reduce a size of the chamfer 45e. In this way, it is easy to prevent the second gear 45 from increasing in size.

The circlip 46 is in direct contact with the groove 43a.

Therefore, it is easy to reduce the depth D5 of the groove 43a. Accordingly, it is easy to maintain the strength of the output shaft 43.

The straddled vehicle 1 includes the transmission 30 described above.

The transmission 30 includes the circlip 46. As described above, it is easy to prevent the disengagement of the circlip 46.

### 6. Modified Embodiments

The present teaching is explained with regard to the above embodiment. Said embodiment can be modified as follows.
(1) In the embodiment described above, the groove 43a is formed in the semicircular shape in the cross section along the axis C. Alternatively, in the cross section along the axis C, the groove 43a may include the arc portion and the linear portion.

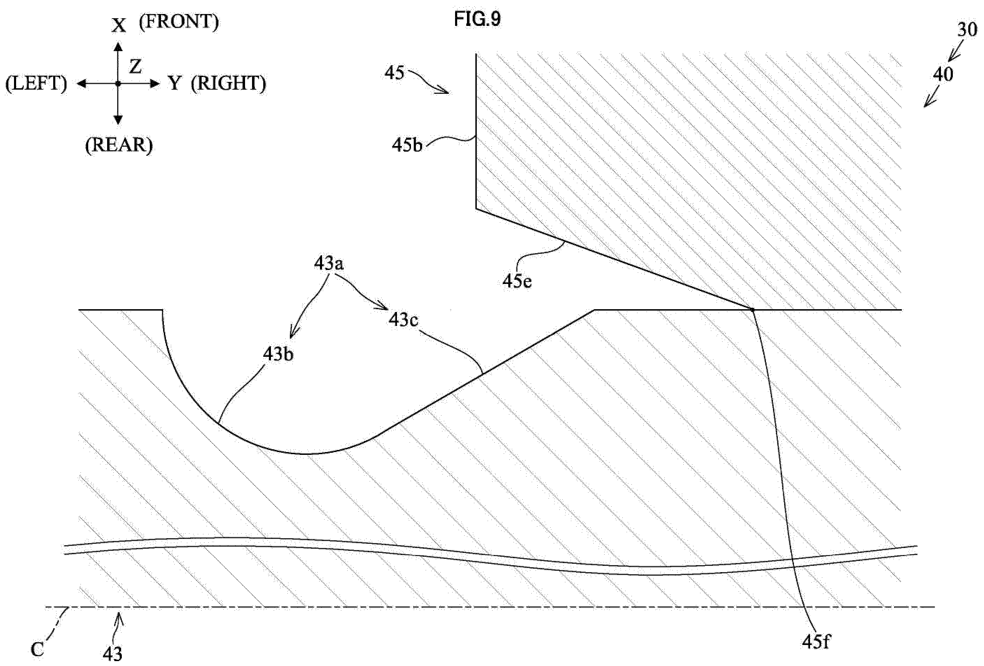

FIG. 9 is an enlarged cross-sectional view of a main portion according to a modified embodiment. Note that detailed description of the same configuration as that of the embodiment will be omitted. The groove 43a includes the arc portion 43b and a linear portion 43c. The arc portion 43b has an arc shape in the cross section along the axis C. The arc portion 43b is, for example, a quadrant. The linear portion 43c has a linear shape in the cross section along the axis C. The arc portion 43b and the linear portion 43c are continuous. The linear portion 43c is inclined with respect to the axis C. The linear portion 43c is not perpendicular to the axis C. An angle between the linear portion 43c and the axis C is, for example, 30 degrees.

The arc portion 43b, the linear portion 43c, and the second gear 45 are arranged in this order along the axis C. The linear portion 43c is arranged between the arc portion 43b and the second gear 45 in the direction of the axis C. Therefore, a distance between the arc portion 43b and the second gear 45 in the direction of the axis C is longer than a distance between the linear portion 43c and the second gear 45 in the direction of the axis C.

The linear portion 43c is disposed to face the chamfer 45e. At least a part of the linear portion 43c is located at the same position as that of the chamfer 45e in the direction of the axis C of the output shaft 43.

According to the present modified embodiment, the following effects are achieved.

The groove 43a includes the arc portion 43b and a linear portion 43c. The arc portion 43b and the linear portion 43c are continuous.

Therefore, it is easy to form the groove 43a. For example, the groove 43a can be formed without changing an angle of a blade of a cutting tool.

(2) In the embodiment described above, the second gear 45 has the chamfer 45e. Alternatively, the chamfer 45e may be omitted. The second gear 45 may not include the chamfer 45e.

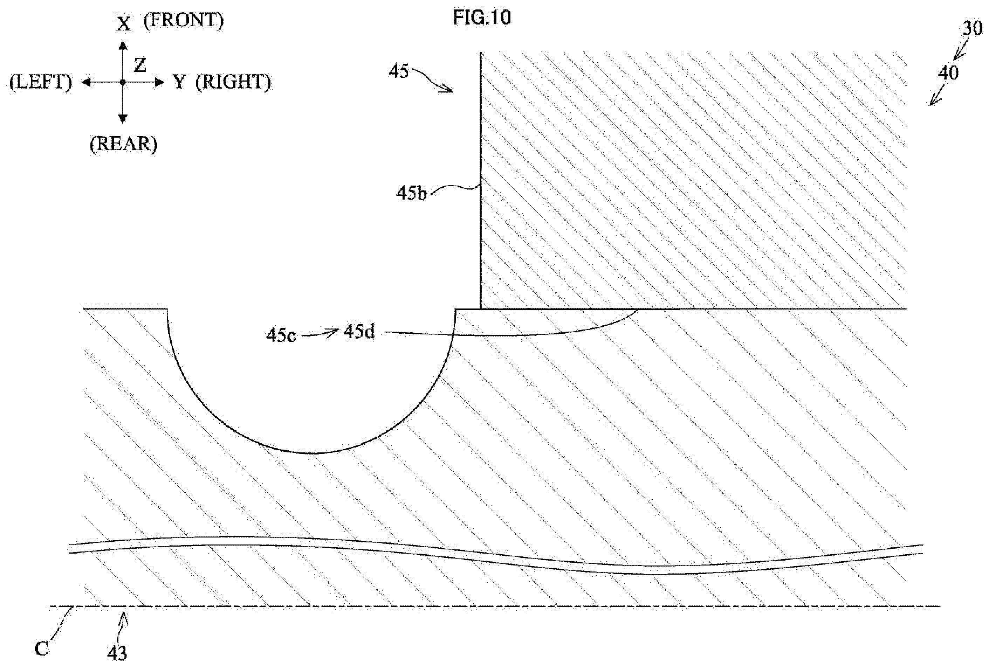

FIG. 10 is an enlarged cross-sectional view of a main portion according to a modified embodiment. Note that detailed description of the same configuration as that of the embodiment will be omitted.

In the cross section along the axis C, the side face 45b and the joint 45d are in contact with each other.

In the cross section along the axis C, the side face 45b and the inner peripheral face 45c intersect at a right angle. In the cross section along the axis C, the side face 45b and the joint 45d intersect at a right angle.

For example, the side face 45b is perpendicular to the axis C of the output shaft 43. The side face 45b of the second gear 45 extends outward in the radial direction of the axis C of the output shaft 43 from the joint 45d of the second gear 45.

According to the present modified embodiment, it is easy to secure the contact area between the output shaft 43 and the second gear 45. For example, it is easy to increase a length of the joint 45d in the direction of the axis C. It is easy to increase an area of the joint 45d.

(3) In the embodiment described above, the output shaft 43 and the second gear 45 are coupled by the press fit. Alternatively, the output shaft 43 and the second gear 45 may be coupled by a spline. According to the present modified embodiment, the second gear 45 always rotates integrally with the output shaft 43 around the axis C of the output shaft 43. The second gear 45 is always non-rotatable around the axis C of the output shaft 43 with respect to the output shaft 43. Even in a case where a significantly large impact acts on the second gear 45, the second gear 45 does not slide with respect to the output shaft 43.

(4) In the embodiment described above, the output shaft 43 and the second gear 45 are coupled by the press fit. Alternatively, the second gear 45 may be always supported to be rotatable around the axis C of the output shaft 43 with respect to the output shaft 43.

(5) In the embodiment described above, the output shaft 43 and the second gear 45 cannot be substantially disassembled. Alternatively, the output shaft 43 and the second gear 45 may be detachable.

(6) In the embodiment described above, the speed reducer 40 rotatably supports the output shaft 43. The output shaft 43 is rotatable around the axis C of the output shaft 43. Alternatively, the speed reducer 40 may non-rotatably support the output shaft 43. The output shaft 43 may be non-rotatable around the axis C of the output shaft 43. The output shaft 43 may be fixed to the transmission 30. The output shaft 43 may not rotate around the axis C of the output shaft 43.

(7) In the embodiment described above, the oblique angle θ is 45 degrees or less. Alternatively, the oblique angle θ may be 30 degrees or less. Further, the oblique angle θ may be 20 degrees or less.

In a case where the oblique angle θ is small, a force acting on the groove 43a by the circlip 46 further gradually increases when the second gear 45 hits the circlip 46. In this way, even in a case where the second gear 45 hits the circlip 46, it is more unlikely for the circlip 46 to deform the groove 43a. Accordingly, it is easier to prevent the disengagement of the circlip 46 from the groove 43a.

(8) In the embodiment described above, the outer peripheral edge 45g of the chamfer 45e is located inward in the radial direction of the axis C with respect to the outer peripheral edge 46c of the circlip 46. Alternatively, the outer peripheral edge 45g of the chamfer 45e may be located outward in the radial direction of the axis C with respect to the outer peripheral edge 46c of the circlip 46. In other words, a diameter of the outer peripheral edge 45g of the chamfer 45e may be larger than the outer diameter of the circlip 46.

In the present modified embodiment, in the case where the second gear 45 moves relative to the output shaft 43 in the thrust direction, the chamfer 45e is in contact with the circlip 46. In the case the second gear 45 moves relative to the output shaft 43 in the thrust direction, the outer peripheral edge 45g of the chamfer 45e is not in contact with the circlip 46. Also in the present modified embodiment, the chamfer 45e shifts the contact position E outward in the radial direction of the axis C. In this way, it is easier to prevent the disengagement of the circlip 46 from the groove 43a.

(9) In the embodiment described above, the first length D3 of the chamfer 45e is shorter than the diameter D7 of the cross section 46b of the circlip 46. Alternatively, for example, the first length D3 is longer than the diameter D7.

(10) In the embodiment described above, the second gear 45 is the helical gear. However, the second gear 45 is not limited to the helical gear. Alternatively, for example, the second gear 45 may be a spur gear.

(11) The embodiment and each of the modified embodiments described in the above (1) to (10) may be further changed as appropriate by replacing or combining each of the configurations with a configuration of another modified embodiment.

## Claims

1. A transmission (30) comprising:
a shaft (43) having a groove (43a);
a gear (45) that has a through hole (B) into which the shaft (43) is inserted and is supported by the shaft (43); and
a circlip (46) that is fitted into the groove (43a) to regulate movement of the gear (45) relative to the shaft (43) in a direction of the axis (C) of the shaft (43),
wherein the circlip (46) has a cross section (46b) in a circular shape.

2. The transmission (30) according to claim 1, wherein when the circlip (46) is fitted into the groove (43a), half or more of the circlip (46) is accommodated in the groove (43a).

3. The transmission (30) according to claim 1 or 2, wherein a depth (D5) of the groove (43a) is 50% or more of a diameter (D7) of the cross section (46b) of the circlip (46) and smaller than the diameter (D7) of the cross section (46b) of the circlip (46).

4. The transmission (30) according to any one of claims 1 to 3, wherein the depth (D5) of the groove (43a) is 60% or less of the diameter (D7) of the cross section (46b) of the circlip (46).

5. The transmission (30) according to any one of claims 1 to 4, wherein in the cross section along the axis (C) of the shaft (43), the groove (43a) is semicircular.

6. The transmission (30) according to any one of claims 1 to 5, wherein the groove (43a) includes an arc portion (43b) and a linear portion (43c), and
the arc portion (43b) and the linear portion (43c) are continuous.

7. The transmission (30) according to any one of claims 1 to 6, wherein the shaft (43) and the gear (45) are coupled by press fit.

8. The transmission (30) according to any one of claims 1 to 7, wherein the gear (45) is a helical gear.

9. The transmission (30) according to any one of claims 1 to 8, wherein the through hole (B) has a first end (B1) facing the circlip (46), and
the gear (45) has a chamfer (45e) that increases a diameter of the first end (B1) of the through hole (B) toward the circlip (46).

10. The transmission (30) according to claim 9, wherein the chamfer (45e) has an outer peripheral edge (45g),
the circlip (46) has an outer peripheral edge (46c), and
when the circlip (46) is fitted into the groove (43a), the outer peripheral edge (45g) of the chamfer (45e) is located inward with respect to the outer peripheral edge (46c) of the circlip (46).

11. The transmission (30) according to claim 9 or 10, wherein in a cross section along the axis (C) of the shaft (43), an angle (θ) between the chamfer (45e) and the shaft (43) is 45 degrees or less.

12. The transmission (30) according to any one of claims 9 to 11, wherein the chamfer (45e) has an inner peripheral edge (45f), and
the inner peripheral edge (45f) is in contact with the shaft (43).

13. The transmission (30) according to any one of claims 9 to 12, wherein the chamfer (45e) has a first length (D3) in the direction of the axis (C) of the shaft (43), and
the first length (D3) is shorter than the diameter (D7) of the cross section (46b) of the circlip (46).

14. The transmission (30) according to any one of claims 1 to 13, wherein the circlip (46) is in direct contact with the groove (43a).

15. A straddled vehicle (1) comprising the transmission (30) according to any one of claims 1 to 14.
